# EUROPÄISCHE PATENTSCHRIFT

(11) **EP 0 530 174 B1**
(45) Veröffentlichungstag und Bekanntmachung des Hinweises auf die Patenterteilung: **20.03.1996**
(21) Anmeldenummer: 92890170.1
(22) Anmeldetag: 22.07.1992
(51) Int. Cl.: G01P 1/12, B60Q 1/52

(54) **Einrichtung zur Überwachung von Fahrzeugen**
Apparatus for monitoring vehicles
Appareil de contrôle pour véhicules

(30) Priorität: 12.08.1991 AT 1583/91
(43) Veröffentlichungstag der Anmeldung: 03.03.1993
(73) Patentinhaber: Pirc, Bogumil, A-8055 Graz (AT)
(72) Erfinder: Pirc, Bogumil, A-8055 Graz (AT)
(74) Vertreter: Köhler-Pavlik, Johann, Dipl.-Ing.

(56) Entgegenhaltungen:
- EP-A- 0 359 595
- WO-A-84/03359
- AT-B- 386 990
- US-A- 4 638 289

## Beschreibung

Die Erfindung betrifft eine Einrichtung zur Überwachung von Fahrzeugen, speziell auch für die Kennzeichnung des Fahrzeugs und die Rekonstruktion der Geschehnisse bei einem Unfall mit den Merkmalen des ersten Teiles von Anspruch 1.

Eine derartige Einrichtung zur Kennzeichnung eines an einem Unfall beteiligten Fahrzeuges ist beispielsweise aus der AT-PS 386 990 bekannt. Dabei wird durch Inbetriebnahme der Signalgeber, wie Sirene und Blinkleuchte, das am Unfall beteiligte Fahrzeug gekennzeichnet und somit dem Lenker dieses Fahrzeuges eine Verheimlichung des Unfalles und eine Fahrerflucht nahezu unmöglich gemacht. Die ordnungsgemäße Funktion der Einrichtung ist durch die außen angebrachte Funktionskontrolleuchte leicht kontrollierbar und unbefugte Eingriffe sind durch Beschädigung der Plombierung des Gehäuses erkennbar. Für die Anbringung der Einrichtung kommen alle ein- und zweispurigen Kraftfahrzeuge, öffentliche Verkehrsmittel usw. in Betracht. Für eine Rekonstruktion des Unfallherganges oder des Unfallzeitpunktes liefert die bekannte Einrichtung durch eine Kamera Bildinformationen. Überdies ist durch Entfernung der Einrichtung vom Fahrzeug nach einem Unfall jegliche Identifikation eine Unfallfahrzeuges unmöglich gemacht.

Andererseits sind beispielsweise aus der DE-PS 638 857, der DE-PS 593 599 oder auch der CH-PS 146 423 Einrichtungen zur Fixierung der Tachoanzeige bzw. zur mechanischen Aufzeichnung der Geschwindigkeit im Augenblick eines Zusammenstoßes beschrieben. Die korrekte und störungsfreie Funktion dieser mechanischen Einrichtungen im Falle eines schweren Unfalles ist nicht gegeben und für den Fall der Zerstörung des Tachometers überhaupt unmöglich. Die US-PS 4 638 289 beschreibt einen in ein Fahrzeug eingebauten elektronischen Unfalldatenrecorder, der mit dem Tachometer und Gebern für verschiedene Parameter verbunden ist, sowie eine Uhr und eine zyklische Speichereinrichtung enthält. Alle diese zuletzt genannten Einrichtungen sind jedoch nicht geeignet, eine Verheimlichung des Unfalles oder eine Fahrerflucht unmöglich zu machen und das Unfallfahrzeug zu kennzeichnen.

Darüberhinaus müssen Unfalldatenrecorder in Art einer "Black Box", wie auch beispielsweise jener der US-PS 4 638 289, in einem speziellen Gerät getrennt vom Fahrzeug ausgewertet werden. Die erhaltenen Daten sind auch bei Rekonstruktion des Unfallherganges nicht einfach erfaßbar und bedürfen meist der Erläuterung durch Sachverständige. Derartige Unfalldatenrecorder sind ebenfalls zur Kennzeichnung von Unfallfahrzeugen weder geeignet noch gedacht, sodaß keinerlei Anordnung von oder Kombinationsmöglichkeit mit Signalgebern vorhanden ist.

Schließlich sieht auch keine dieser Einrichtungen eine möglichst sichere Kennzeichnung zur Identifikation des Unfallfahrzeuges bzw. von dessen Besitzer vor.

Ausgehend von den bekannten Konstruktionen ist es daher die Aufgabe der vorliegenden Erfindung, eine Einrichtung zur Kennzeichnung und Überwachung von Fahrzeugen anzugeben, mit deren Hilfe zusätzlich im Falle eines Unfalles dessen Hergang einfach, rasch und ohne aufwendige Hilfsmittel mittels einfach faßlicher Informationen rekonstruierbar ist, vorzugsweise bereits am Unfallort, und die Verschuldensfrage leichter geklärt werden kann. Dies ist insbesondere aufgrund des rasch wachsenden Anteiles von Fahrzeugen mit Antiblockiersystemen von Bedeutung, bei welchen die herkömmliche Unfallrekonstruktion aufgrund der Bremsspuren immer schwieriger bzw. sogar unmöglich wird. Fahrzeuge ohne ABS sind Fahrzeugen mit ABS, welche auch bei hohen Geschwindigkeit kaum Bremsspuren hinterlassen, im Nachteil.

Deshalb ist erfindungsgemäß eine Einrichtung zur Überwachung und Kennzeichnung von Fahrzeugen mit den Merkmalen von Anspruch 1 vorgesehen.

Vorteilhafterweise ist dabei die Sirene manuell abschaltbar.

Damit ist es möglich, den Unfallzeitpunkt auch im Nachhinein ohne Zeugen genau zu ermitteln und die Geschwindigkeit des Fahrzeuges vor oder auch während des Unfalles auch ohne Bremsspuren feststellen zu können. Dabei wird andauernd die Geschwindigkeit gemessen und diese abgespeichert. Nach einer bestimmten Zeitspanne, vorzugsweise 10 Sekunden, werden diese gespeicherten Werte von den neuen Geschwindigkeitswerten überschrieben. Erfolgt jedoch ein Unfall und der Aufprallschalter setzt die Signalgeber in Betrieb, wird ein Signal an das innere Gehäuse und die darin befindliche Speichereinrichtung abgegeben, wodurch der Überschreibvorgang abgebrochen und die Geschwindigkeitswerte in der eingestellten Zeitspanne vor dem Unfall bis zum Unfall selbst gespeichert sind und abgerufen werden können. Zu diesem Zweck sind Anzeigeeinrichtungen, vorzugsweise 7-Segment-LED-Anzeigen, vorgesehen, auf welchen in einfacher Weise durch Betätigung von Bedienungselementen, wie vorzugsweise Tasten, die gespeicherten Werte für Datum, Uhrzeit und Geschwindigkeiten angezeigt werden können. Aufwendige und kostspielige Spezialgeräte zur Auswertung sind nicht notwendig und zusammen mit den leicht auswertbaren Bildinformationen durch die eingebaute Kamera ergibt sich eine rasche und einfache Möglichkeit zur Rekonstruktion des Unfallgeschehens.

Um schließlich nach Melden des Unfallgeschehens oder Aufnahme des Unfallherganges einen ungestörten Abtransport bzw. ein ungehindertes Weiterfahren des Fahrzeuges zu ermöglichen, sind die Signalgeber mittels eines speziellen Bedienungselementes deaktivierbar, wobei auch zur neuerlichen Vorbereitung für den Notfall die gespeicherten Werte gelöscht und die Einrichtung in den Grundzustand zurückversetzt werden kann. Damit dies nicht unbefugt und zur Verheimlichung eines Unfalles geschieht, ist das Bedienungselement gesichert und nur durch befugte Personen, beispielsweise Gendarmerie- oder Polizeibeamte, rückstellbar bzw. wieder in den normalen Betriebszustand zu versetzen, wo die Einrichtung ihre Überwachungsfunktion wieder ausüben kann. Dies ist insbesondere bei kleineren Unfällen von Bedeutung, die aufgrund nur geringfügiger Beschädigungen ein Weiterfahren der beteiligten Fahrzeuge gestatten.

Und sollte ein aktiviertes Gehäuse mit den Signalgebern zum Zweck der Verheimlichung eines Unfalles weggeworfen werden, ist trotzdem der Lenker bzw. der Besitzer des entsprechenden Fahrzeuges mittels der Identifkitionseinrichtungen am äußeren Gehäuse leicht ausforschbar.

Codierte Sperreinrichtungen für die Blockierung des vorzugsweise auch als Taste ausgeführten Bedienungselementes zum Rückstellen der Einrichtung sind im Sinne der Verkehrssicherheit und Verkehrsmoral günstiger, da ein unbefugtes Aufbrechen einer Plombierung zum Rückstellen der Einrichtung erst bei einer allenfalls routinemäßigen Kontrolle längere Zeit nach einem Unfall festgestellt werden kann. Codierte Sperreinrichtungen, wie beispielsweise durch spezielle Schlüssel sperrbare Schlösser oder durch Magnetkarten betätigbare Sperren, verhindern dagegen grundsätzlich ein unbefugtes Abschalten und Rückstellen der Überwachungseinrichtung.

In der nachfolgenden Beschreibung soll beispielhaft eine bevorzugte Ausführungsform der erfindungsgemäßen Einrichtung zur Überwachung von Fahrzeugen unter Bezugnahme auf die beigefügten Zeichnungen näher erläutert werden. Dabei zeigen
- Fig. 1: das äußere Gehäuse mit den Signalgebern, der Kontrolleuchte und der Plakette,
- Fig. 2: zeigt in schematischer Darstellung die elektrische Schaltung der erfindungsgemäßen Einrichtung und
- Fig. 3: zeigt eine Vorderansicht des inneren Gehäuses mit den Anzeige- und Abrufeinrichtungen.

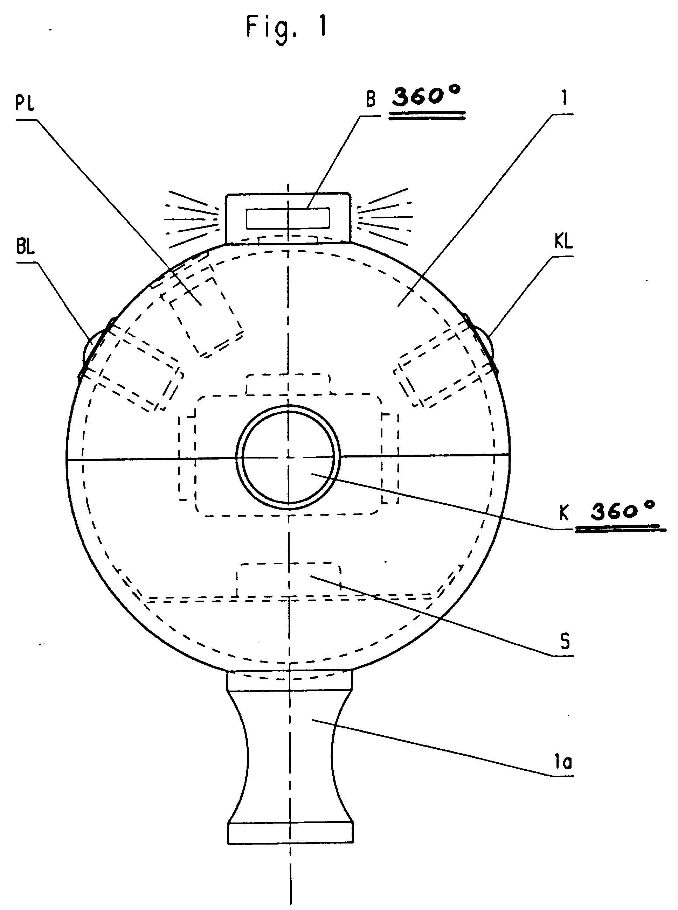

Die Fig. 1 zeigt beispielhaft das äußere Gehäuse 1, in welchem sich die Blinkleuchte BL und die Sirene S als Signalgeber befinden. Ebenso ist in dem Gehäuse 1 die Funktionskontrolleuchte KL sowie vorzugsweise zumindest eine Kamera K mit zugehörigem Blitzlicht B vorgesehen. In dem dargestellten Beispiel ist das Gehäuse 1 kugelförmig ausgebildet und mit dem Fahrzeug über einen Fuß 1a verbunden. Natürlich kann das Gehäuse 1 auch andere Formen, insbesondere aerodynamisch angepaßte Formen, aufweisen und allenfalls in Teile des Fahrzeuges, beispielsweise die Rückspiegel oder Rückspiegelhalterungen integriert sein. Durch strichlierte Linien ist die im Inneren des Gehäuses 1 befindliche Plakette P1 zur Identifikation dazugestellt.

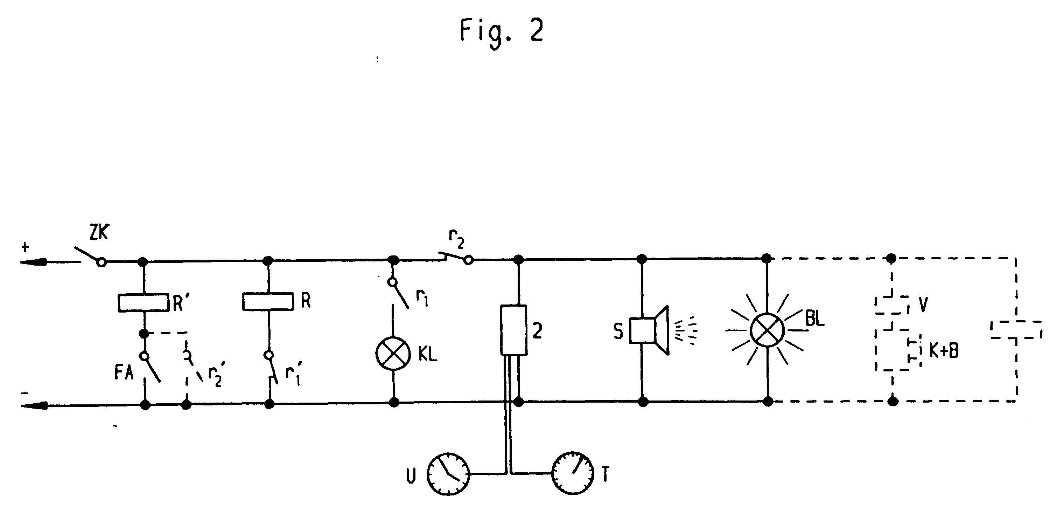

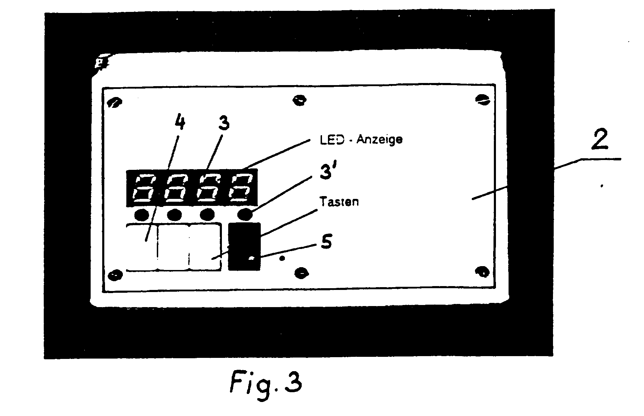

Ein Beispiel zur Auslegung der elektrischen Schaltung zum Betrieb der erfindungsgemäßen Einrichtung ist in Fig. 2 dargestellt. Das Beispiel zeigt den Aufbau in preiswerter und robuster Relaistechnik, wobei natürlich ein analoger Aufbau in Halbleitertechnik genausogut möglich wäre. Mit Ausnahme des Gehäuses 2, welches die Speicher und Anzeigeeinrichtungen trägt und das in Fig. 3 genauer dargestellt ist, ist die Schaltung der Fig. 2 im Gehäuse 1 enthalten, um unbefugte Manipulationen zu verhindern.

Über den Zündkontakt ZK wird die erfindungsgemäße Einrichtung an Spannung gelegt, welche vom Akku des Fahrzeuges zur Verfügung gestellt wird. Im Fall einer Kollision wird der Arbeitskontakt FA des ersten Relais R' geschlossen, wodurch dessen Ruhekontakt r₁' geöffnet und allenfalls der Selbsthaltekontakt r₂' geschlossen wird. Dadurch öffnet das Relais R seinen Arbeitskontakt r₁ und schließt seinen Ruhekontakt r₂, wodurch die Signalgebersirene S und das Blinklicht BL mit Strom versorgt werden. Auch die Kamera K und das Blitzlicht B kann allenfalls unter Zwischenschaltung einer Verzögerungseinrichtung V dadurch ausgelöst werden. Schließlich könnte auch ein weiteres Relais unter Spannung gesetzt werden, das durch Öffnen des Ruhekontaktes den Zündstromkreis unterbricht und die Weiterfahrt verhindert.

Wenn nun die Signalgeber S, BL, allenfalls die Kamera K mit Blitz B, ausgelöst werden, wird auch ein Impuls an das parallel im Stromkreis hängende Gehäuse 2 weitergeleitet. Wie aus Fig. 2 zu ersehen ist, steht dieses Gehäuse sowohl mit dem Tachometer T des Fahrzeuges als auch einer Uhr U mit Datumskennzeichnung in Verbindung. Bei Eintreffen des Impulses von der elektrischen Schaltung, werden die zuletzt eingespeicherten Werte für Geschwindigkeiten, Datum und Uhrzeit in einer Speichereinrichtung im Gehäuse 2 festgehalten.

An einer in Fig. 3 dargestellten Bedienungsoberfläche des Gehäuses 2 können diese Werte dann abgerufen werden. Dazu sind Anzeigeeinrichtungen 3 vorgesehen, welche vorzugsweise in der Form von Siebensegment-LED- Anzeigen ausgebildet sind. Leuchten 3' zeigen dabei an, um welchen der gespeicherten Werte es sich handelt. Das Abrufen der Werte erfolgt über Tasten 4 oder ähnliche Bedienungselemente. Eine zusätzliche Taste 5 oder ein ähnliches Bedienungselement erlaubt das Löschen der gespeicherten Werte und das Rücksetzen der Schaltung in den Grundzustand. Dabei ist diese Taste 5 vorzugsweise plombierbar oder durch nicht dargestellte codierte Sperreinrichtungen blockierbar.

## Patentansprüche

1. Einrichtung zur Überwachung und Kennzeichnung von Fahrzeugen, umfassend ein außen am Fahrzeug montiertes, erstes Gehäuse (1) , enthaltend eine Sirene (S), eine Blinkleuchte (Bl) oder ähnliche Signalgeber, eine Funktionskontrolleuchte (FL), gegebenenfalls eine Kamera (K) bzw. mehrere Kameras mit Gesamtblickwinkel 360°, vorzugsweise mit Blitzlicht mit gleichem Leuchtwinkel, sowie eine zum Betrieb der genannten Geräte nötige elektrische Schaltung, wobei das Gehäuse (1) vorzugsweise plombierbar ist; und einen am Chassis des Fahrzeuges montierten Aufprallschalter, der die Geräte im Gehäuse in Betrieb setzt; gekennzeichnet durch Identifikationsmittel für das Fahrzeug und den Besitzer im ersten Gehäuse, beispielsweise eine unzerstörbare Plakette (PL) oder einen in einer Patrone aufbewahrten Mikrofilm, sowie durch ein vom ersten Gehäuse (1) separates zweites Gehäuse (2) im Fahrzeuginneren mit elektronischer Speichereinrichtung für zumindest einen Geschwindigkeitswert und eine Uhrzeit, welches Gehäuse (2) mit dem Tachometer (T) des Fahrzeuges und einer Uhr (U) verbunden ist und welches auch mit der elektrischen Schaltung des äußeren, ersten Gehäuses (1) zum Empfang eines das Auslösen der Signalgeber (S, Bl) anzeigenden Impulses verbunden ist, wobei das zweite, innere Gehäuse (2) zusätzlich Anzeigeeinrichtungen für die Anzeige von gespeicherten Werten für Datum, Uhrzeit und/oder zumindest einen Geschwindigkeitswert und Bedienungselemente, beispielsweise Tasten (4), zum Abruf der gespeicherten Werte sowie eine plombierbare oder durch eine codierte Sperreinrichtung sperrbare Taste (5) oder ein ähnliches Bedienungselement aufweist, mit welcher die gespeicherten Werte gelöscht werden können und die elektrische Schaltung der gesamten Einrichtung in den Grundzustand rücksetzbar ist.

2. Einrichtung gemäß Anspruch 1, dadurch gekennzeichnet, daß die Sirene (S) manuell abschaltbar ist.

## Claims

1. Device for monitoring and identifying vehicles, comprising a first casing (1) mounted externally on the vehicle and containing a siren (S), a flashing light (B1) or similar signal generators, a function control light (FL), optionally one or more cameras (K) with a total viewing angle of 360°, preferably with a flashlight having the same illumination angle, as well as the electric circuit necessary for operating said means, the casing (1) preferably lead sealable and an impact switch mounted on the vehicle chassis, which puts the means in the casing into operation, characterised by identification means for the vehicle and the occupant in the first casing, eg an indestructible badge, as well as by a second casing (2) in the vehicle interior separate from the first casing and having electronic storage means for at least one speed value and a clock time, said casing (2) being connected to the vehicle tachometer (T) and a clock (U) and which is also connected to the electric circuit of the external, first casing (1) for receiving a pulse indicating the triggering of the signal generator (S, B1), the first, inner casing (2) having additional display means for displaying stored values for the date, clock time and/or at least one speed value and controls, eg keys (4) for polling the stored values, as well as a key (5) or similar control, which is lead-sealable or lockable by a coded locking device and with which the stored values can be erased and the electric circuit of the overall device can be returned to the basic state.

2. Device according to claim 1, characterised in that the siren (S) can be switched off manually.

## Revendications

1. Dispositif pour la surveillance et l'identification de véhicules automobiles, comprenant un premier boîtier (1) monté à l'extérieur du véhicule et comprenant une sirène (S), un gyrophare (B1) ou avertisseur similaire, une lampe de contrôle de fonction (FL), éventuellement une caméra (K) respectivement plusieurs caméras d'angle de visée totale de 360°, de préférence avec un flash de même angle d'éclairage ainsi qu'un circuit électrique nécessaire au fonctionnement desdits appareils, le boîtier (1) pouvant être de préférence plombé, et comprenant un interrupteur d'impact, monté sur le châssis de l'automobile, qui met en route les appareils dans le boîtier, caractérisé par des moyens d'identification pour le véhicule et le propriétaire dans le premier boîtier, par exemple une plaquette indestructible (PL) ou un microfilm logé dans une cartouche, ainsi que par un second boîtier (2) séparé du premier boîtier (1) à l'intérieur du véhicule présentant un dispositif de mémorisation électronique pour au moins une valeur de vitesse et un horaire, boîtier (2) qui est relié au compteur de vitesse (T) et une horloge (U) et qui est relié également au circuit électrique du premier boîtier extérieur (1) pour la réception d'une impulsion indiquant le déclenchement de l'avertisseur (S, B1), le second boîtier intérieur (2) présentant en plus des dispositifs d'affichage pour l'affichage des valeurs stockées pour la date, l'heure et/ou au moins une valeur de vitesse et des éléments de manipulation, par exemple des touches (4) pour le rappel des valeurs mémorisées ainsi qu'une touche plombée (5) ou verrouillable par un dispositif de blocage codé ou un élément de manipulation similaire, avec lequel les valeurs stockées peuvent être annulées et qui remet le circuit électrique de tout le dispositif à l'état d'origine.

2. Dispositif selon la revendication 1, caractérisé en ce que la sirène (S) peut être mise hors service manuellement.
